Europäisches Patentamt

European Patent Office

Office européen des brevets

(11) Numéro de publication: **0 286 592**
**A1**

## (12) DEMANDE DE BREVET EUROPEEN

(21) Numéro de dépôt: **88810189.6**

(22) Date de dépôt: **23.03.88**

(51) Int. Cl.⁴: **B 25 J 15/02**

(30) Priorité: **23.03.87 CH 1094/87**

(43) Date de publication de la demande:
**12.10.88 Bulletin 88/41**

(84) Etats contractants désignés:
**BE CH DE ES FR GB IT LI SE**

(71) Demandeur: **SCHUNK HORMEC AUTOMATION AG**
**Weyermattstrasse 4**
**CH-2560 Nidau (CH)**

(72) Inventeur: **Bader, Hans-Peter**
**Falbringen 23**
**CH-2502 Biel (CH)**

(74) Mandataire: **Rochat, Daniel Jean et al**
**Bovard SA Ingénieurs-conseils ACP Optingenstrasse 16**
**CH-3000 Bern 25 (CH)**

(54) **Pince de transport, notamment pour appareil de montage automatique.**

(57) La nervure longitudinale (4) du socle (1) forme le longeron central de la pince. Les deux axes (7, 8) sont solidaires de cette nervure et portent des coulisses à billes (16) sur lesquelles sont montées les deux mâchoires (10, 11) de la pince. Les deux rainures obliques (14, 15) délimitées par les parties proéminentes (10a, 10b, 11a, 11b) des mâchoires (10, 11) coopèrent avec les galets (24) qui sont montés sous la tête d'entraînement (22). Celle-ci est solidaire de la tige de vérin (21). Le vérin (19) est fixé au socle (1).

FIG. 2

EP 0 286 592 A1

Bundesdruckerei Berlin

## Description

### Pince de transport, notamment pour appareil de montage automatique.

Le développement des appareils de montage automatique se heurte au problème consistant à prévoir des pinces de transport capables de saisir des pièces relativement lourdes pour les transporter d'un emplacement à un autre et fonctionnant avec un degré de précision suffisant. Ces pinces doivent être d'une construction simple. Elles doivent être rigides, fonctionner avec une sûreté éprouvée, tout en assurant la précision de positionnement requise qui peut atteindre l'ordre de grandeur du 1/100 de mm. De plus, les mâchoires de la pince doivent pouvoir être équipées de mordaches échangeables adaptées aux différentes pièces qu'il y a lieu de transporter.

Le but de la présente invention est de créer une pince qui réponde à ces diverses exigences mieux que ce n'était le cas jusqu'ici.

On connaissait déjà une pince de transport, notamment pour appareil de montage automatique, comportant un socle ayant un axe central, deux mâchoires parallèles l'une à l'autre mobiles en translation dans une direction perpendiculaire à l'axe et équipées de moyens de réception de mordaches adaptées à une pièce à saisir, deux arbres transversaux fixes de guidage des mâchoires par rapport au socle et des moyens d'entraînement comportant une tête d'entraînement mobile selon l'axe du socle.

Cependant, la pince de ce genre décrite dans le fascicule de brevet DE 3325921 présentait l'inconvénient d'être d'un encombrement relativement grand, tout en ne permettant pas d'atteindre une précision de fonctionnement correspondant aux exigences.

Les pinces décrites dans les publications US 4518187 et JPN 48/17864 souffrent des mêmes inconvénients, notamment du fait que la transmission des efforts s'effectue en soumettant certaines pièces à des moments de flexion qui peuvent nuire à la fiabilité de l'appareil.

Selon la présente invention, la pince selon l'invention est caractérisée en ce que le socle comporte un longeron central s'étendant selon l'axe, les dits arbres fixes sont fixés par leur partie centrale dans le dit longeron, les mâchoires présentent chacune d'une part deux forures pour recevoir une extrémité libre de chacun des arbres fixes et d'autre part une gorge rectiligne s'ouvrant dans une face supérieure des mâchoires et s'étendant obliquement par rapport à l'axe, et la tête d'entraînement comporte une partie transversale qui s'étend au-dessus de la dite face supérieure et porte deux galets symétriques engagés chacun dans une des dites gorges.

On va décrire ci-après, à titre d'exemple, une forme d'exécution de l'objet de l'invention, en se référant au dessin annexé, dont :

la fig. 1 est une vue en élévation longitudinale de la pince,

la fig. 2 une vue en plan de dessus,

la fig. 3 une vue en coupe selon la ligne III-III de la fig. 1 et

la fig. 4 une vue analogue à la fig. 3 montrant une variante.

La pince représentée au dessin peut être fixée sur un bras mobile, sur un chariot, sur un disque rotatif, ou de façon générale sur n'importe quel élément faisant partie notamment d'un appareil de montage automatique. Elle comporte un socle 1 en forme d'équerre, dont la partie arrière est munie de deux forures cylindriques parallèles 2 qui permettent de fixer ce socle sur une embase en appuyant sur celle-ci la face inférieure 3 du socle. Au centre du socle 1 et dans le sens de son axe longitudinal s'étend une nervure de profil rectangulaire 4 jouant le rôle de longeron axial, et présentant deux flancs longitudinaux parallèles 5 et 6.

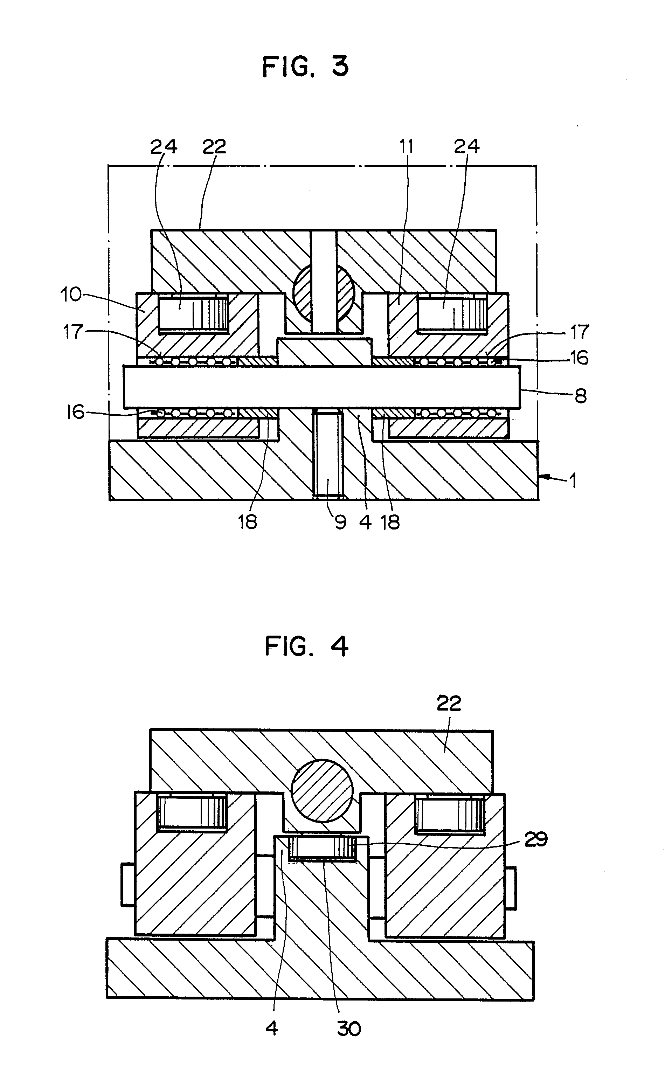

Deux arbres fixes 7 et 8 sont fixés dans des forures transversales ménagées dans le longeron 4, les axes de ces forures étant perpendiculaire aux flancs 5 et 6 et écartés l'un de l'autre d'une distance prédéterminée, apte à assurer le fonctionnement de la pince comme on le verra plus loin. Ces deux arbres 7 et 8 peuvent être verrouillés dans leur position finale par le moyen de vis de blocage telle que la vis 9 (fig. 3) assurant la fixation de l'arbre 8. Il résulte de ce montage que les deux arbres 7 et 8 comportent chacun deux segments extrêmes qui sont libres et s'étendent en porte-à-faux de part et d'autre du longeron axial 4. Ce sont sur les extrémités de ces arbres que sont guidées les deux mâchoires 10 et 11 de la pince, de sorte que ces deux mâchoires peuvent se déplacer en translation parallèlement l'une à l'autre en s'approchant ou en s'éloignant de l'axe central du longeron 4. Les parties antérieures proéminentes des mâchoires 10 et 11 sont conformées de façon à recevoir des mordaches échangeables (non représentées). Ainsi par exemple, chaque mâchoire 10 ou 11 comporte dans son flanc externe deux goupilles saillantes 12 et un taraudage transversal 13 permettant la fixation d'une mordache. A sa partie arrière, chaque mâchoire 10 ou 11, dont le profil transversal est rectangulaire, comme on le voit à la fig. 3, présente deux segments ou plots proéminents de forme triangulaire, 10a, 10b, ou 11a, 11b. Ces deux segments proéminents sont situés en regard l'un de l'autre de façon à délimiter des rainures obliques 14 et 15, ces deux rainures étant à flancs parallèles et étant orientées symétriquement selon un angle déterminé par exemple 30° par rapport à l'axe longitudinal du longeron 4.

On notera encore que pour assurer un guidage parfaitement parallèle des deux mâchoires 10 et 11, deux paires de coulisses à billes 16 (fig. 3) sont montées sur les extrémités libre des arbres 7 et 8, et dans des forures correspondantes 17, ménagées dans les mâchoires 10 et 11. Ces coulisses à billes permettent de déplacer les mâchoires sur les arbres 7 et 8 par un effet de roulement. Les coulisses 16 elles-mêmes se déplaçant sur des distances inférieures de moitié aux déplacements des mâchoires. Pour limiter les déplacements des mâchoires 10 et 11 vers le longeron 4, on a prévu des bagues d'espacement 18 montées sur les arbres 7 et 8 et s'engageant dans les forures 17 des mâchoires 10 et 11.

Pour commander les mâchoires 10 et 11, la pince décrite comporte un vérin 19 dont le corps est fixé par des vis disposées axialement contre le flanc arrière de l'équerre 1. Le corps du vérin 19 est équipé de deux raccords à soupapes de non-retour 20 disposées sur l'un de ses flancs et permettant le fonctionnement du vérin à double effet. Le piston (non représenté) que comporte le cylindre du vérin est solidaire d'une tige 21 qui traverse la partie montante arrière du socle 1 et qui s'étend selon l'axe du longeron 4. A son extrémité libre, cette tige 21 porte une tête d'entraînement 22 qui a la forme d'une traverse munie d'une forure centrale qui est engagée sur l'extrémité de la tige 21 et qui est bloquée par une goupille 23. Cette traverse 22 porte de part et d'autre de sa partie centrale deux galets à billes 24 montés sur des goupilles 25 chassées dans des trous de la traverse. Les diamètres des galets à billes 24 sont très légèrement inférieurs à la largeur des rainures 14 et 15. D'autre part, ces galets sont agencés de façon à rouler contre l'un ou l'autre des flancs de ces rainures lorsque la tige de vérin est déplacée vers l'avant ou vers l'arrière par commande du vérin 19. Il suffit que la largeur des rainures soit ajustée de manière à laisser un jeu au galet et lui permettre de rouler contre le flanc de la rainure avec lequel il est en contact. Ainsi, l'écartement des mâchoires est proportionnel à la course axiale de la tête d'entraînement.

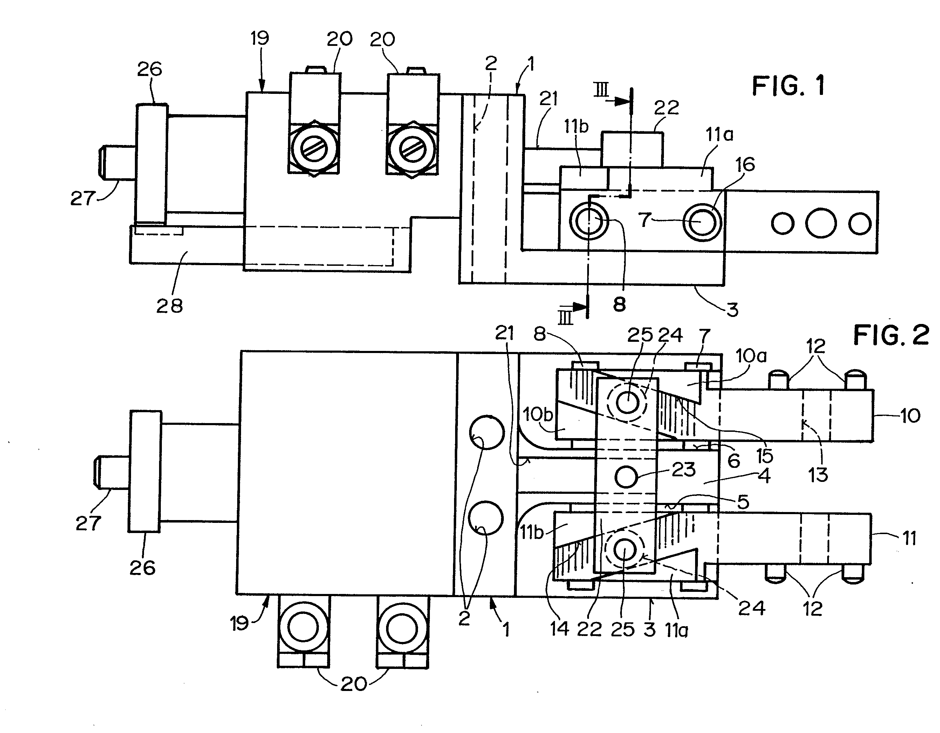

Comme le montre la fig. 2, les rainures 14 et 15 s'étendent en plan entre les arbres 7 et 8 de sorte que les forces d'écartement ou de rapprochement exercées sur les mâchoires compensent d'une manière statiquement déterminée et stable les forces de freinage des coulisses 16, et cela pour toutes les positions de la tête d'entraînement.

Ainsi, la commande du vérin provoque une translation de rapprochement ou d'éloignement des mâchoires 10 et 11 et permet de faire fonctionner la pince avec la précision requise, même à l'encontre de forces de résistance relativement importantes. Il est donc possible de transporter avec la pince décrite des pièces relativement lourdes et de les saisir dans des positions exactement prédéterminées. Le serrage s'effectue par un déplacement absolument parallèle des deux mâchoires.

Toutes les pièces soumises à des contacts de frottement seront usinées avec précision, traitées et rectifiées.

Finalement, la pince est complétée par un écrou de positionnement et de contrôle 26 qui est vissé sur une partie proéminente filetée 27 de la tige de vérin 21 et qui peut être bloqué dans la position voulue grâce à une vis de blocage. L'écrou 26 se déplace au-dessus d'un détecteur de position électronique 28 qui est fixé au corps de vérin 19, de sorte que la course de la tête de positionnement 22 peut être contrôlée et commandée avec précision.

Dans la variante représentée à la fig. 4, le guidage de la tête d'entraînement est encore complété par un galet 29 d'axe vertical monté sous la barre transversale 22 et se déplaçant dans une gorge longitudinale 30 à flancs parallèles ménagée dans la face supérieure du longeron 4, entre les arbres fixes 7 et 8.

Finalement, on indiquera encore qu'au lieu d'un vérin, les moyens d'entraînement pourraient aussi comporter un moteur électrique dont le stator serait fixé au socle et dont le rotor serait solidaire d'un écrou ou d'une tige filetée. Dans ce cas, la tête d'entraînement comporterait, au lieu d'une fixation à la tige 21, une fixation à une tige filetée ou à un écrou, de sorte que la rotation du moteur entraînerait le déplacement axial de la tête d'entraînement et par conséquent, le serrage ou le desserrage des mâchoires.

## Revendications

1. Pince de transport, notamment pour appareil de montage automatique, comportant un socle ayant un axe central, deux mâchoires parallèles l'une à l'autre mobiles en translation dans une direction perpendiculaire à l'axe et équipées de moyens de réception de mordaches adaptées à une pièce à saisir, deux arbres transversaux fixes de guidage des mâchoires par rapport au socle et des moyens d'entraînement comportant une tête d'entraînement mobile selon l'axe du socle, caractérisée en ce que le socle comporte un longeron central s'étendant selon l'axe, les dits arbres fxes sont fixés par leur partie centrale dans le dit longeron, les mâchoires présentent chacune d'une part deux forures pour recevoir une extrémité libre de chacun des arbres fixes et d'autre part une gorge rectiligne s'ouvrant dans une face supérieure des mâchoires et s'étendant obliquement par rapport à l'axe, et la tête d'entraînement comporte une partie transversale qui s'étend au-dessus de la dite face supérieure et porte deux galets symétriques engagés chacun dans une des dites gorges.

2. Pince de transport selon la revendication 1, caractérisée en ce que les dits arbres fixes comportent deux paires de coulisses à billes, montées chacune sur une extrémité libre d'un arbre fixe.

3. Pince de transport selon la revendication 1, caractérisée en ce que les moyens d'entraînement comportent un vérin dont la tige est solidaire de la tête d'entraînement et le cylindre est solidaire du socle.

4. Pince de transport selon la revendication 1, caractérisée en ce que les moyens d'entraînement comportent un moteur entraînant un élément, vis ou écrou, d'un dispositif actuateur à mouvement linéaire, dont l'autre élément, écrou ou vis, est relié à la tête d'entraînement.

5. Pince de transport selon la revendication 1, caractérisée en ce que les deux arbres parallèles sont écartés l'un de l'autre d'une distance proportionnelle à la course axiale de la tête d'entraînement.

6. Pince selon la revendication 5, caractérisée en ce que chaque gorge de guidage est délimitée par deux plots saillants, de forme triangulaire, s'étendant en hauteur au-dessus d'une surface plane de la mâchoire, qui forme le fond de la gorge, les flancs de chaque gorge étant formés par une face latérale de chacun des plots qui délimitent la gorge.

FIG. 1

FIG. 2

0286592

0286592

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 518 187 (BLATT et al.)<br>* Colonne 2, ligne 56 - colonne 3, ligne 65 *<br>--- | 1-3 | B 25 J 15/02 |
| P,Y | US-A-4 696 503 (COLLODEL)<br>* Colonne 2, lignes 16-35; colonne 3, lignes 30-36 * | 1-3 | |
| P,A | | 4 | |
| A | DE-A-3 325 921 (PFAFF INDUSTRIE-MASCHINEN GmbH)<br>* Page 4, ligne 34 - page 5, ligne 36 *<br>--- | 1-3 | |
| A | US-A-4 591 198 (MONFORTE)<br>* Colonne 4, lignes 38-68 *<br>--- | 2 | |
| A | JP-U-48 017 864<br>* En entier *<br>--- | 1-3 | |
| P,A | EP-A-0 241 878 (LITTON SYSTEMS INC.)<br>* Page 2, colonne 2, ligne 32 - page 3, colonne 1, ligne 18 *<br>--- | 1,2,4-6 | DOMAINES TECHNIQUES RECHERCHES (Int. Cl.4) |
| A | US-A-4 647 097 (LESSWAY)<br>----- | | B 25 J<br>B 65 G<br>B 23 Q |

Le présent rapport a été établi pour toutes les revendications

| Lieu de la recherche | Date d'achèvement de la recherche | Examinateur |
|---|---|---|
| LA HAYE | 01-07-1988 | LAMMINEUR P.C.G. |